# EUROPEAN PATENT SPECIFICATION

(11) **EP 2 538 334 B1**
(45) Date of publication and mention of the grant of the patent: **21.08.2019**
(21) Application number: 11005034.1
(22) Date of filing: 21.06.2011
(51) Int. Cl.: G06F 12/08

(54) **Cache streaming system**
Cache-Streaming-System
Système de flux de cache

(43) Date of publication of application: 26.12.2012
(73) Proprietor: Lantiq Beteiligungs-GmbH & Co. KG, 85579 Neubiberg (DE)
(72) Inventor: Zettler, Thomas, 85635 Hoehenkirchen-Siegertsbrunn (DE); Banerjee, Ritesh, 560008 Bangalore (IN); Fenzl, Gunther, 85635 Höhenkirchen-Siegertsbrunn (DE); Thudt, Raimar, 82024 Taufkirchen (DE); Wachendorf, Olaf, 82008 Unterhaching (DE)
(74) Representative: Kraus & Weisert Patentanwälte PartGmbB

(56) References cited:
- WO-A1-2011/059979
- US-A1- 2003 103 526
- US-A1- 2005 246 501

## Description

### Background of the invention

The utility of broadband communications has extended into virtually every segment of daily life, at work, at home, and in the public square. Further, the types of data being networked into enterprise, private, and public environments are no longer exclusive thereto. Thus, the requirements for networking into virtually any setting have become increasingly complex, as data formats and standards vie for bandwidth and access into a destination environment.

US 2005/0246501 A1 discloses systems and methods for performing selective caching in a network processing and other contexts. In an implementation, upon receipt of a processor's request for a data item, a determination is made as to whether the data item is stored in the processor's cache. If the data item is not stored in the cache, the data item is retrieved from an external memory unit.

WO 2011/059979 A1 discloses a selective file system caching based upon a configurable cache map, where input/output requests are received from an application and compared with a cache map. The cache map controls a selective caching of data. US 2003/0103526 A1 discloses a system including a processing element, a cache and an additional memory. In an implementation, a packet comprising a packet header and a body are received along a path into a packet memory through a network interface. The frame header is pulled from memory into bridge services processor such as an input/output processor for memory translations. A local processing element stores the header data in its cache from a local memory for examination and/or modification. When all parts have been received, the header and body are concatenated and decoded as a normal packet.

### Summary of the invention

The independent claims define the invention in various aspects. The dependent claims define embodiments according to the invention. The embodiments or examples of the following description which are not covered by the appended claims are considered as not being part of the invention according to this description.

In a first aspect, the invention encompasses a system having a stream cache and a storage. The stream cache comprises a stream cache controller to mediate input data streaming through the stream cache. Further, the stream cache comprises a stream cache memory to store at least first portions of the input data, as determined by the stream cache controller, and to further output the stored first portions of the input data to a data processor. The storage is adapted to receive second portions of the input data, as determined by the stream cache controller. The first portion is intact data packets until the storage capacity of the cache memory is at its limit. The second portion is the most recently input data packets when the storage capacity of the cache memory is at its limit. An effect of the invention in the first aspect may be a reduction in processing time with respect to a conventional system that submits all input data to data processing. An effect of the invention in the first aspect may be a reduction of power consumption with respect to a conventional system that sends all input data to memory. In an embodiment, the storage is adapted to store the second portions of the input data. In a particular embodiment, the storage is adapted to further transmit the second portions of the input data to the stream cache memory. In particular, in an embodiment, the stream cache memory is adapted to output to the data processor the second portions of the input data transmitted from the storage. An effect may be to improve on allocation of processing tasks to processing time, in particular, to improve a sequence of processing portions of input data dependent on whether first or second portions of the input data are to be processed.

In an embodiment according to the invention in the first aspect, the system further comprises an input buffer from which the stream cache receives the input data.

In an embodiment according to the invention in the first aspect, the stream cache controller is to mediate the input data streaming through the stream cache based on formatting of the input data. An effect may be to enable, on average, transmission of certain portions of input data in one format, for example in a header format, to the data processor sooner than other portions of input data in a second format, for example in a payload format.

In an embodiment according to the invention in the first aspect, the stream cache controller is to mediate the input data streaming through the stream cache based on priority of a stream of the input data. An effect may be to enable, on average, transmission of certain portions of input data with one priority, for example with a high priority, to the data processor sooner than other portions of input data with a second priority, for example with a low priority.

In an embodiment according to the invention in the first aspect, the stream cache controller is to mediate the input data streaming through the stream cache by storing pointers of the portions of the input data stored on the stream cache memory and determining to store the other portions of the input data on the storage.

In an embodiment according to the invention in the first aspect, the storage is a level-two cache. In an embodiment according to the invention in the first aspect, the storage is an external memory.

In an embodiment according to the invention in the first aspect, the storage is to transmit the stored second portions of the input data to the stream cache memory on a first-in first-out basis as a time determined by the stream cache controller. An effect may be to enable processing of the first portions of the input data in accordance with a first sequence of processing, while processing the second portions of the input data in a second sequence of processing that may differ from the first sequence. For example, the second sequence of processing is a first-in first-out sequence, but the first sequence is not. In a particular embodiment according to the invention in the first aspect, the storage is to transmit the stored second portions of the input data to the stream cache memory on a first-in first-out basis based on formatting thereof as instructed by the stream cache controller.

In a second aspect, the invention encompasses a computer-readable medium. The computer-readable medium stores instructions thereon that, when executed, cause one or more processors to: determine first portions of an input data stream to be stored locally on a cache memory and second portions of the input data stream to be stored on a different storage; store pointers to the first portions of the input data stream that are stored locally on the cache memory; monitor the cache memory as the stored first portions of the input data stream are output to a data processing engine; and fetch the second portions of the input data stream that are stored on the different storage based on a specified criterion. The first portion is intact data packets until the storage capacity of the cache memory is at its limit. The second portion is the most recently input data packets when the storage capacity of the cache memory is at its limit. An effect of the invention in the first aspect may be a reduction of power consumption with respect to a conventional system that sends all input data to memory. An effect may also be to improve on allocation of processing tasks to processing time, in particular, to improve a sequence of processing portions of input data dependent on whether first or second portions of the input data are to be processed.

In an embodiment according to the invention in the second aspect, the one or more instructions that, when executed, cause the one or more processors to determine include determining to store data packets on the cache memory on a first-in basis and to store data packets an the different storage when the cache memory is at capacity. An effect may be to avoid loading the one or more processors indiscriminately with tasks related to input data on a first-in basis, while the one or more processors operate at a limit.

In an embodiment according to the invention in the second aspect, the one or more instructions that, when executed, cause the one or more processors to determine include determining to store first level priority data packets on the cache memory and to store second level priority data packets on the different storage.

In an embodiment according to the invention in the second aspect, the one or more instructions that, when executed, cause the one or more processors to fetch include fetching the portions of the data stream that are stored on the different storage to the cache memory as the portions of the input data stream stored on the cache memory are output to the data processing engine. In a particular embodiment, the one or more instructions that, when executed, cause the one or more processors to fetch include fetching the portions of the data stream that are stored on the different storage to the cache memory on a first-in first-out basis.

In an embodiment according to the invention in the second aspect, the different storage is either of a level-two cache or an external memory.

The foregoing summary is illustrative only and is not intended to be in any way limiting. In addition to the illustrative aspects, embodiments, and features described above, further aspects, embodiments, and features will become apparent by reference to the drawings and the following detailed description. In particular, the foregoing and other features of this disclosure will become more fully apparent from the following description and appended claims, taken in conjunction with the accompanying drawings. Understanding that these drawings depict plural embodiments in accordance with the disclosure and are, therefore, not to be considered limiting of its scope, the disclosure will be described with additional specificity and detail through use of the accompanying drawings, in which:
**FIG. 1** shows an example embodiment of a cache streaming system;
**FIG. 2** shows an example processing flow in accordance with at least one embodiment of a cache streaming system; and
**FIG. 3** shows an example computing environment by which one or more embodiments of a cache streaming system may be implemented.

### Detailed description

In the following detailed description, reference is made to the accompanying drawings, which form a part of the description. Unless otherwise noted, the description of successive drawings may reference features from one or more of the previous drawings to provide clearer context and a more substantive explanation of the current example embodiment. Still, the example embodiments described in the detailed description, drawings, are not meant to be limiting. It will be readily understood that the aspects of the present disclosure, as generally described herein, and illustrated in the figures, can be arranged, substituted, combined, separated, and designed in a wide variety of different configurations, all of which are explicitly contemplated herein within the scope of the appended claims.

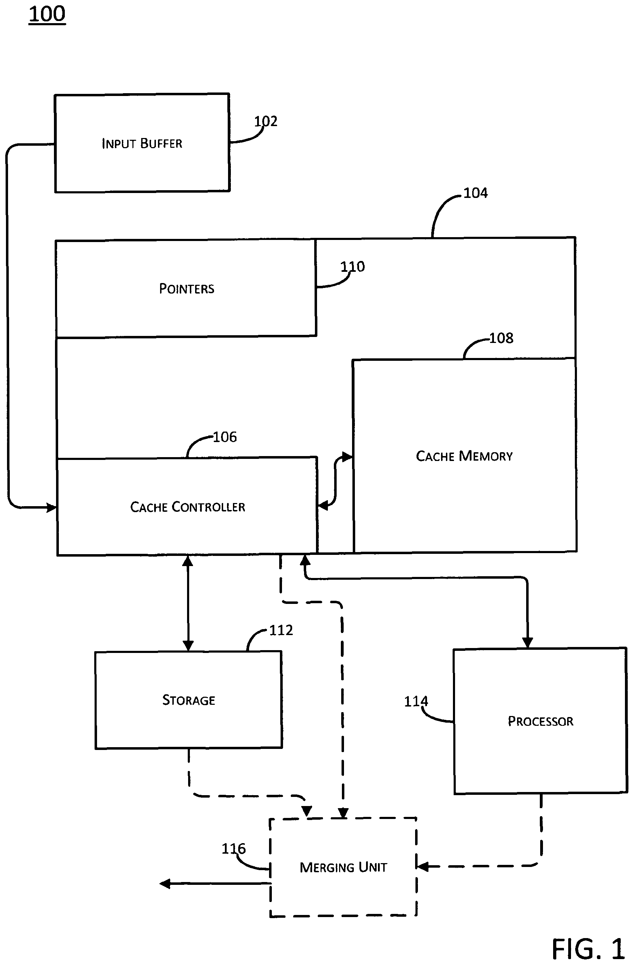

**FIG. 1** shows an example embodiment of a cache streaming system 100, which may alternately be referred to herein as "system 100". In addition to cache 104, which includes at least cache controller 106, cache memory 108, and pointers storage 110, one or more implementations of system 100 may include input buffer 102, storage 112, processor 114, and merging unit 116.

Input buffer 102 may receive a stream of data packets from a data source,
e.g., via from an interface hardware or by direct memory access (DMA) from another cache, and input the stream of data to cache 104. In at least one embodiment, input buffer 102 may split data packets received as part of the stream of data into headers and respective payloads, i.e., bodies. Processing of the separated headers and payloads are described below in the context of one or more embodiments of system 100.

Cache 104, alternatively referred to herein as "stream cache 104", may be implemented as hardware, software, firmware, or any combination thereof. More particularly, cache 104 may be a cache that is coherent with other caches to allow multiple processors and other devices, e.g., accelerators, to access content stored therein. Stream cache 104 may further facilitate cache-to-cache transfer to allow a coherent processor to fetch data therefrom without requiring the data to be transferred to an external memory. The fetched data, as described below, may include data packets or data packet headers and/or data packet payloads.

Cache controller 106 may also be implemented as hardware, software, firmware, or any combination thereof to mediate the input data packets streaming through cache 104. More particularly, cache controller 106 may determine to store a configured portion of the input data stream to cache memory 106 and another portion to at least one embodiment of storage 112.

As described herein, cache controller 106 may determine to store, fetch, or retrieve data packets or portions thereof to various destinations. Thus, to "determine", as disclosed herein, may include cache controller 106 or another controller or component of system 100 routing or causing one or more data packets to be routed to a destination, either directly or by an intervening component or feature of system 100. Such example destinations may include cache memory 108, storage 112, processor 114, and merging unit 116.

By at least one embodiment, cache controller 106 may determine to store intact data packets, both header and payload, into cache memory 108 until storage capacity of cache memory 108 is at its limit. That is, cache controller 106 may determine to store data packets to cache memory 108 on a first-in basis. Accordingly, when the storage capacity of cache memory 108 is at its limit, cache controller 106 may determine to store the most recently input data packets to at least one embodiment of storage 112. That is, cache controller 106 may determine to store data packets to at least one embodiment of storage 112 on a last-in (to cache 104) basis.

By at least one implementation not corresponding to a claimed embodiment, when input buffer 102 splits data packets received as part of the stream of data into headers and respective payloads, i.e., bodies, cache controller 106 may determine to store the data packet headers to cache memory 108 and corresponding data packet payloads to at least one embodiment of storage 112.

By at least another embodiment, in combination with the other embodiments described herein, cache controller 106 may determine to store intact data packets or data packet headers to cache memory 108 based on priority of the data stream in which the data packets are routed to cache 104 from input buffer 102. The priority of the data streams may depend, for example, upon a format of the respective data streams. Thus, in the context of a network gateway at which data streams, including multimedia data streams, are competing for bandwidth, priority may be given, e.g., to voice data packets over video data packets. Document file data that does not have any real time requirements may be an example of low priority data, by this embodiment. In other words, cache controller 106 may determine to storage intact data packets or data packet headers in cache memory 108 depending upon a currently run application. Accordingly, as in the aforementioned example, cache controller 106 may determine to store voice data packets, entirely or portions thereof, to cache memory 108 while video data packets, entirely or portions thereof, may be stored to at least one embodiment of storage 112 until all of the voice data packets are routed to processor 114.

By at least any of the embodiments described above by which cache controller 106 may determine to store data packets to at least one embodiment of storage 112, cache controller 106 may further monitor cache memory 108 as data packets are fetched to processor 114 for processing. Thus, as storage capacity becomes available in cache memory 108, cache controller 106 may fetch data, either intact packets or data packet payloads, on a first-in first-out basis or on a priority basis based on, e.g., formats of the respective data streams.

Cache memory 108 may also be implemented as hardware, software, firmware, or any combination thereof to at least store portions of the input data streams, as determined by cache controller 106, and to further output the stored data back to cache controller 106.

Pointer storage 110 may also be implemented as hardware, software, firmware, or any combination thereof to at least store physical or virtual addresses of data, either intact data packets or portions thereof, stored to cache memory 108 and embodiments of storage 112. Accordingly, cache controller 106 may reference data, either data packets or payloads, for fetching from the utilized embodiments of storage 112 by utilizing pointers stored on pointer storage 110.

Storage 112 may also be implemented as hardware, software, firmware, or any combination thereof to store at least a configured portion of the input data stream as determined by cache controller 106.

By at least one embodiment, cache controller 106 may determine to store intact data packets, both header and payload, to cache memory 108 on a first-in basis, so when the storage capacity of cache memory 108 is at its limit, cache controller 106 may determine to store the most recently input data packets to at least one embodiment of storage 112 on a last-in (to cache 104) basis.

By at least one implementation not corresponding to an embodiment, when input buffer 102 splits data packets received as part of the stream of data into headers and respective payloads, cache controller 106 may determine to store the data packet headers to cache memory 108 and corresponding data packet payloads to at least one embodiment of storage 112.

By at least another embodiment, cache controller 106 may determine to store intact data packets or data packet headers to cache memory 108 based on priority, so that cache memory 108 may store top level data packets or data packet headers and storage 112 may store secondary level priority data packets or data packet headers.

Embodiments of storage 112 may include an L2 (Level-2) cache, which is a memory on the same chip as cache 104, packaged within the same module. As set forth above, storage 112 as an L2 cache may feed into cache memory 108, which may be an L1 cache, which feeds processor 114. To the extent that cache streaming system 100 includes an L2 cache, cache streaming system 100 may be implemented as a system-on-a-chip (SOC) solution, i.e., having all features sitting on a common circuit chip.

Embodiments of storage 112 may further include an external RAM (Random Access Memory) or an external HDD (hard disk drive), alternatively or in combination with an L2-cache. As a RAM, example embodiments of storage 112 may include an SDRAM (Synchronous Dynamic RAM) or PRAM (Phase Change Memory).

Regardless of its implementation as an L2-cache or RAM, storage 112 is to store data packets or data packet payloads in such a manner that, upon fetching by cache controller 106 on either a first-in first-out basis or on a priority basis, there is no delay caused for processor 114.

Processor 114 may also be implemented as hardware, software, firmware, or any combination thereof to at least process data from cache memory 108. The data from cache memory 108 may include data packets or data packet headers from the data stream input to cache 104 from input buffer 102.

In accordance with the one or more embodiments by which input buffer 102 splits received data packets into headers and respective payloads and cache controller 106 may determine to store the data packet headers in cache memory 108, processor 114 may process the headers apart from the respective payloads. Upon processing one or more data packet headers, processor 114 may return the one or more processed data packet headers to cache controller 106 or forward the one or more processed data packet headers to merging unit 116.

Merging unit 116 is an optional component of system 100 that may also be implemented as hardware, software, firmware, or any combination thereof to merge data packet headers that have been processed by processor 114 with respectively corresponding data packet payloads.

As stated above, upon processing one or more data packet headers, processor 114 may return the one or more processed data packet headers to cache controller 106. By this example scenario, cache controller 106 may then forward the one or more processed data packet headers to merging unit 116. Further, cache controller 106 may further cause storage 112 to forward to merging unit 116 the data packet payloads corresponding to the one or more processed data packet headers. Alternatively, particularly when storage 112 is embodied as a RAM, a controller (not shown) for storage 112 may cause storage 112 to forward the data packet payloads corresponding to the one or more processed data packet headers to merging unit 116.

Data processed by processor 114 may be forwarded to its destination from processors 114 or from merging unit 116.

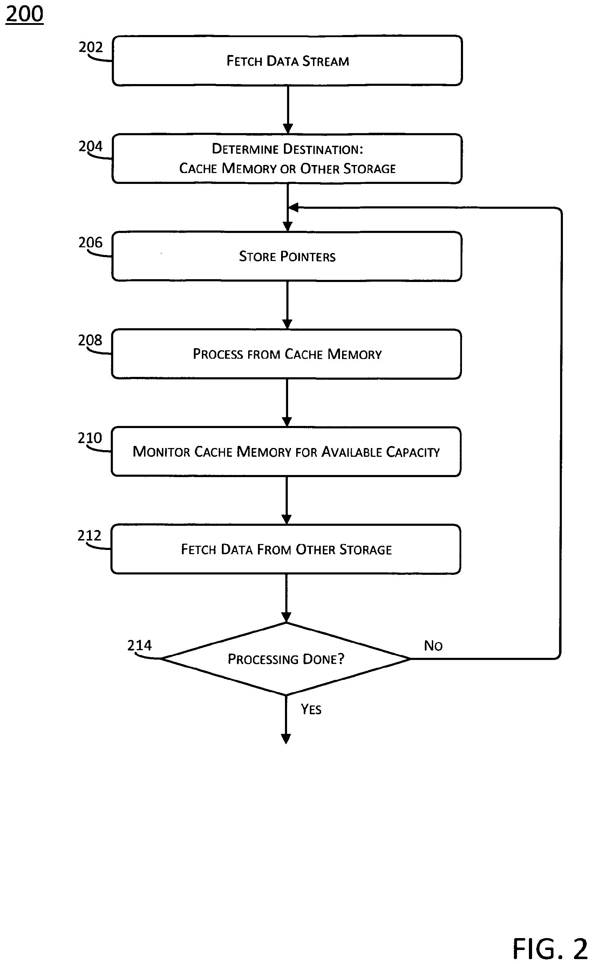

**FIG. 2** shows an example processing flow 200 in accordance with at least one embodiment of a cache streaming system. More particularly, processing flow 200 is described herein with reference to the example system 100 described above with reference to FIG. 1. However, processing flow 200 is not limited to such example configuration, and therefore the present description is not intended to be limiting in any such manner. Further, example processing flow 200 may include one or more operations, actions, or functions as illustrated by one or more of blocks 202, 204, 206, 208, 210, 212, and/or 214. Although illustrated as discrete blocks, various blocks may be divided into additional blocks, combined into fewer blocks, or even eliminated, depending on a desired implementation. Moreover, the blocks in the FIG. 2 may be operations that may be implemented by hardware, software, or a combination thereof associated with measurement cache system 100. Processing flow 200 may begin at block 202.

Block 202 may include an input data stream fetched into cache 104 from input buffer 102, either directly from interface hardware or by DMA from another cache. As set forth above, in at least one implementation not corresponding to a claimed embodiment, input buffer 102 may split data packets received as part of the stream of data into headers and respective payloads. Processing flow 200 may proceed to block 204.

Block 204 may include cache controller 106 determining a destination for intact or portions of data packets included in the input data stream. That is, cache controller 106 may determine to store a configured portion of the input data stream to cache memory 106 and another portion to at least one embodiment of storage 112.

Again, to "determine", as disclosed herein, may include cache controller 106 or another controller or feature of system 100 routing or causing one or more data packets to be routed to a destination, either directly or by an intervening component or feature of system 100.

By at least one embodiment, cache controller 106 may determine to store intact data packets, both header and payload, to cache memory 108 until cache memory 108 is full on a first-in basis. Then, cache controller 106 may determine to store the most recently input data packets to at least one embodiment of storage 112 on a last-in (to cache 104) basis.

By at least one implementation not corresponding to a claimed embodiment, when input buffer 102 splits data packets received as part of the stream of data into headers and respective payloads, cache controller 106 may determine to store the data packet headers to cache memory 108 and corresponding data packet payloads to at least one embodiment of storage 112.

By at least another embodiment, in combination with the other embodiments described herein, cache controller 106 may determine to store intact data packets or data packet headers to cache memory 108 based on priority of the data stream in which the data packets are routed to cache 104 from input buffer 102. That is, cache controller 106 may determine to storage intact data packets or data packet headers to cache memory 108 depending upon a currently run application.

As set forth above, the input data stream may be fetched into cache 104 from input buffer 102, either directly from interface hardware or by direct memory access from another cache. Thus, in accordance with at least one other embodiment, a controller associated with the interface hardware or the other cache may determine to write the intact data packets or data packet headers to either of cache 104 or an embodiment of storage 112. Processing flow 200 may proceed to block 206.

Block 206 may include cache controller 106 determining to store to pointer storage 110 the physical or virtual addresses of data, either intact data packets or portions thereof, stored to cache memory 108 and embodiments of storage 112. Processing flow 200 may proceed to block 208.

Block 208 may include processor 114 process data from cache memory 108. The data from cache memory 108 may include data packets from the data stream input to cache 104 from input buffer 102. As set forth previously, in accordance with implementations not corresponding to a claimed embodiment, processor 114 may process the headers apart from the respective payloads. Thus, block 208 may further include processor 114 returning the one or more processed data packet headers to cache controller 106 or forwarding the one or more processed data packet headers to merging unit 116. Processing flow 200 may proceed to block 210.

Block 210 may include cache controller 106 monitoring cache memory 108 as data packets, either in their entirety or just headers thereof, are fetched back from cache memory 108 and then to processor 114 for processing. Processing flow 200 may proceed to block 212.

Block 212 may include cache controller 106, as capacity in cache memory 108 becomes available, fetching data, either intact packets or data packet payloads, on a first-in first-out basis or on a priority basis. Processing flow 200 may proceed to decision block 214.

Decision block 214 may include cache controller 106 determining whether all data packets or data packet headers associated with an input data stream have been processed. More particularly, as cache controller 106 monitors cache memory 108, a determination may be made as to whether all of an input data stream has been processed.

If the decision at decision block 214 is "no", processing flow returns to block 206.

If the decision at decision block 214 is "yes", processing for the input data stream has been completed.

As a result of the determinations resulting from processing flow 200, high performance data stream processing may be implemented by hardware, software, firmware, or a combination thereof.

While various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

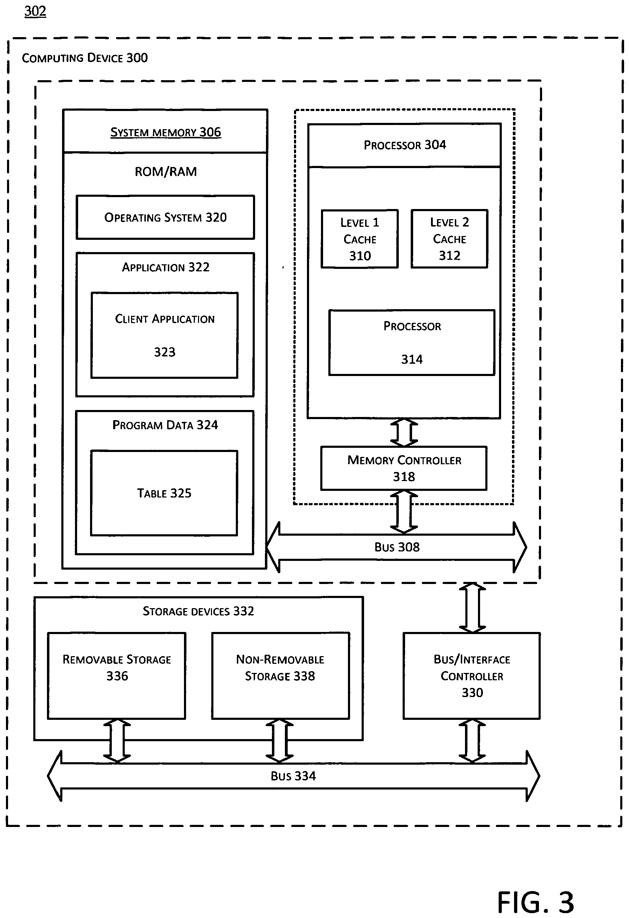

**FIG. 3** shows sample computing device 300 in which various embodiments of device discovery in a ubiquitous computing environment may be implemented. More particularly, **FIG. 3** shows an illustrative computing embodiment, in which any of the operations, processes, etc. described herein may be implemented as computer-readable instructions stored on a computer-readable medium. The computer-readable instructions may, for example, be executed by a processor of a mobile unit, a network element, and/or any other computing device.

In an example configuration 302, computing device 300 may typically include one or more processors 304 and a system memory 306. A memory bus 308 may be used for communicating between processor 304 and system memory 306.

Depending on the desired configuration, processor 304 may be of any type including but not limited to a microprocessor, a microcontroller, a digital signal processor (DSP), or any combination thereof. Processor 304 may include one or more levels of caching, such as level one cache 310 and level two cache 312, and processor core 314. Cache 104 may be implemented as level one cache 310 and at least one embodiment of storage 112 may be implemented as level two cache 312.

An example processor core 314 may include an arithmetic logic unit (ALU), a floating point unit (FPU), a digital signal processing core (DSP Core), or any combination thereof. Processor 114 may be implemented as processor core 314. Further, example memory controller 318 may also be used with processor 304, or in some implementations memory controller 318 may be an internal part of processor 304.

Depending on the desired configuration, system memory 306 may be of any type including but not limited to volatile memory (such as RAM), non-volatile memory (such as ROM, flash memory, etc.) or any combination thereof. Storage 112 may be implemented as memory 306 in at least one embodiment of system 100. System memory 306 may include an operating system 320, one or more applications 322, and program data 324.

Application 322 may include Client Application 323 that is arranged to perform the functions as described herein including those described previously with respect to FIGS. 1 and 2. Program data 324 may include Table 325, which may alternatively be referred to as "figure table 325" or "distribution table 325".

Computing device 300 may have additional features or functionality, and additional interfaces to facilitate communications between basic configuration 302 and any required devices and interfaces. For example, bus/interface controller 330 may be used to facilitate communications between basic configuration 302 and one or more data storage devices 332 via storage interface bus 334. Data storage devices 332 may be removable storage devices 336, non-removable storage devices 338, or a combination thereof. Examples of removable storage and non-removable storage devices include magnetic disk devices such as flexible disk drives and hard-disk drives (HDD), optical disk drives such as compact disk (CD) drives or digital versatile disk (DVD) drives, solid state drives (SSD), and tape drives to name a few. Example computer storage media may include volatile and non-volatile, removable and non-removable media implemented in any method or technology for storage of information, such as computer-readable instructions, data structures, program modules, or other data.

System memory 306, removable storage devices 336, and non-removable storage devices 338 are examples of computer storage media. Computer storage media may include, but are not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which may be used to store the desired information and which may be accessed by computing device 300. Any such computer storage media may be part of computing device 300.

1 and 2. Program data 324 may include Table 325, which may alternatively be referred to as "figure table 325" or "distribution table 325."

Computing device 300 may have additional features or functionality, and additional interfaces to facilitate communications between basic configuration 302 and any required devices and interfaces. For example, bus/interface controller 330 may be used to facilitate communications between basic configuration 302 and one or more data storage devices 332 via storage interface bus 334. Data storage devices 332 may be removable storage devices 336, non-removable storage devices 338, or a combination thereof. Examples of removable storage and non-removable storage devices include magnetic disk devices such as flexible disk drives and hard-disk drives (HDD), optical disk drives such as compact disk (CD) drives or digital versatile disk (DVD) drives, solid state drives (SSD), and tape drives to name a few. Example computer storage media may include volatile and nonvolatile, removable and non-removable media implemented in any method or technology for storage of information, such as computer readable instructions, data structures, program modules, or other data.

System memory 306, removable storage devices 336, and non-removable storage devices 338 are examples of computer storage media. Computer storage media may include, but not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which may be used to store the desired information and which may be accessed by computing device 300. Any such computer storage media may be part of computing device 300.

## Claims

1. A system, comprising:
a stream cache (104), comprising:
a stream cache controller (106) adapted to store, fetch or retrieve intact data packets,
a stream cache memory (108) adapted
to store intact data packets, as determined by the stream cache controller (106), until the storage capacity of the stream cache memory (108) is at its limit, and
to further output the stored intact data packets of input data to a data processor (114); and
**characterised in that**
the system further comprises a storage (112) adapted to receive and store the most recently input data packets, as determined by the stream cache controller (106), when the storage capacity of the stream cache memory (108) is at its limit.

2. The system according to Claim 1, further comprising an input buffer (102) from which the stream cache (104) is adapted to receive the input data.

3. The system according to Claim 1 or 2, wherein the stream cache controller (106) is adapted to mediate the input data streaming through the stream cache (104) based on formatting of the input data.

4. The system according to any of Claims 1 to 3, wherein the stream cache controller (106) is adapted to mediate the input data streaming through the stream cache (104) based on priority of a stream of the input data.

5. The system according to any of Claims 1 to 4, wherein the stream cache controller (106) is adapted to mediate the input data streaming through the stream cache (104) by storing pointers of the input data packets stored on the stream cache memory (108).

6. The system according to any of Claims 1 to 5, wherein the storage is provided by a level-two cache (312) and/or an external memory (336, 338).

7. The system according to any of Claims 1 to 6, wherein the storage (112) is adapted to transmit the stored data packets of the input data to the stream cache memory (108) on a first-in first-out basis at a time determined by the stream cache controller (106).

8. The system according to any of Claims 1 to 7, wherein the storage (112) is adapted to transmit the stored data packets of the input data to the stream cache memory (108) on a first-in first-out basis based on formatting thereof as instructed by the stream cache controller (106).

9. A computer-readable medium storing instructions thereon that, when executed by one or more processors, cause the one or more processors:
to determine intact data packets of an input data stream to be stored locally on a cache memory (108) until the storage capacity of the cache memory (108) is at its limit and the most recently input data packets of the input data stream to be stored on a different storage (112) when the storage capacity of the cache memory (108) is at its limit;
to store pointers to the intact data packets of the input data stream that are stored locally on the cache memory (108);
to monitor the cache memory (108) as the stored data packets of the input data stream are output to a data processing engine (114); and
to fetch the data packets of the input data stream that are stored on the different storage (112) based on a specified criterion.

10. The computer-readable medium according to Claim 9, wherein fetching includes fetching the intact data packets of the data stream that are stored on the different storage (112) to the cache memory (108) on a first-in first-out basis.

## Patentansprüche

1. System, umfassend:
einen Stream-Cache (104), umfassend:
einen Stream-Cache-Controller (106), eingerichtet zum Speichern, Holen oder Abrufen von intakten Datenpaketen,
einen Stream-Cache-Speicher (108), eingerichtet zum Speichern intakter Datenpakete entsprechend der Festlegung durch den Stream-Cache-Controller (106), bis die Speicherkapazität des Stream-Cache-Speichers (108) ihre Grenze erreicht, und ferner zum Ausgeben der gespeicherten intakten Datenpakete von Eingabedaten zu einem Datenprozessor (114); und
**dadurch gekennzeichnet, dass**
das System ferner einen Speicher (112) umfasst, eingerichtet
zum Empfangen und Speichern der zuletzt eingegebenen Datenpakete entsprechend der Feststellung durch den Stream-Cache-Controller (106), wenn die Speicherkapazität des Stream-Cache-Speichers (108) ihre Grenze erreicht.

2. System nach Anspruch 1, ferner umfassend einen Eingangspuffer (102), wobei der Stream-Cache (104) eingerichtet ist, um daraus die Eingabedaten zu empfangen.

3. System nach Anspruch 1 oder 2, wobei der Stream-Cache-Controller (106) eingerichtet ist, um das Streaming der Eingabedaten durch den Stream-Cache (104) basierend auf einer Formatierung eines Streams der Eingabedaten zu vermitteln.

4. System nach einem der Ansprüche 1 bis 3, wobei der Stream-Cache-Controller (106) eingerichtet ist, um das Streaming der Eingabedaten durch den Stream-Cache (104) basierend auf einer Priorität eines Streams der Eingabedaten zu vermitteln.

5. System nach einem der Ansprüche 1 bis 4, wobei der Stream-Cache-Controller (106) eingerichtet ist, um das Streaming der Eingabedaten durch den Stream-Cache (104) durch Speichern von Zeigern der im Stream-Cache-Speicher (108) gespeicherten Eingabedatenpakete zu vermitteln.

6. System nach einem der Ansprüche 1 bis 5, wobei das Speichern durch einen Zwei-Stufen-Cache (312) und/oder einen externen Speicher (336, 338) bereitgestellt wird.

7. System nach einem der Ansprüche 1 bis 6, wobei der Speicher (112) eingerichtet ist zum Senden der gespeicherten Datenpakete der Eingabedaten zum Stream-Cache-Speicher (108) auf einer "First-In-First-Out"-Basis zu einem durch den Stream-Cache-Controller (106) festgelegten Zeitpunkt.

8. System nach einem der Ansprüche 1 bis 7, wobei der Speicher (112) eingerichtet ist zum Senden der gespeicherten Datenpakete der Eingabedaten zum Stream-Cache-Speicher (108) auf einer "First-In-First-Out"-Basis, auf der Grundlage von deren Formatierung entsprechend der Anweisung durch den Stream-Cache-Controller (106).

9. Rechnerlesbares Medium, umfassend darauf gespeicherte Anweisungen, die bei Ausführung durch einen oder mehrere Prozessoren den einen oder die mehreren Prozessoren veranlassen zum
Ermitteln intakter Datenpakete eines lokal in einem Cache-Speicher (108) zu speichernden Eingabedaten-Streams, bis die Speicherkapazität des Cache-Speichers (108) ihre Grenze erreicht, und der zuletzt eingegebenen Datenpakete des in einem unterschiedlichen Speicher (112) zu speichernden Eingabedaten-Streams, wenn die Speicherkapazität des Cache-Speichers (108) ihre Grenze erreicht;
Speichern von Zeigern zu den intakten Datenpaketen des Eingabedaten-Streams, die lokal im Cache-Speicher (108) gespeichert sind;
Überwachen des Cache-Speichers (108) bei der Ausgabe der gespeicherten Datenpakete des Eingabedaten-Streams zu einer Datenverarbeitungs-Engine (114); und
Holen der Datenpakete des Eingabedaten-Streams, die in dem unterschiedlichen Speicher (112) gespeichert sind, basierend auf einem angegebenen Kriterium.

10. Rechnerlesbares Medium nach Anspruch 9, wobei das Holen das Holen der intakten Datenpakete des Daten-Streams, die in dem unterschiedlichen Speicher (112) gespeichert sind, in den Cache-Speicher (108) auf einer "First-In-First-Out"-Basis aufweist.

## Revendications

1. Système comprenant :
un cache de flux (104) comprenant :
un dispositif de commande de cache de flux (106) conçu pour stocker, fusionner ou récupérer des paquets de données intacts,
une mémoire cache de flux (108) conçue
pour stocker des paquets de données intacts, tels que déterminés par le dispositif de commande de cache de flux (106), jusqu'à ce que la capacité de stockage de la mémoire cache de flux (108) soit à sa limite, et
pour en outre transmettre en sortie les paquets de données intacts stockés de données d'entrée à un dispositif de traitement de données (114) ; et
**caractérisé en ce que**
le système comprend en outre un dispositif de stockage (112) conçu
pour recevoir et stocker les paquets de données les plus récemment entrés, tels que déterminés par le dispositif de commande de cache de flux (106), lorsque la capacité de stockage de la mémoire cache de flux (108) est à sa limite.

2. Système selon la revendication 1, comprenant en outre une mémoire tampon d'entrée (102) à partir de laquelle le cache de flux (104) est conçu pour recevoir les données d'entrée.

3. Système selon la revendication 1 ou 2, dans lequel le dispositif de commande de cache de flux (106) est conçu pour faciliter la transmission en continu de données d'entrée à travers le cache de flux (104) en se basant sur le formatage des données d'entrée.

4. Système selon l'une quelconque des revendications 1 à 3, dans lequel le dispositif de commande de cache de flux (106) est conçu pour faciliter la transmission en continu de données d'entrée à travers le cache de flux (104) en se basant sur une priorité d'un flux des données d'entrée.

5. Système selon l'une quelconque des revendications 1 à 4, dans lequel le dispositif de commande de cache de flux (106) est conçu pour faciliter la transmission en continu de données d'entrée à travers le cache de flux (104) en stockant des pointeurs des paquets de données d'entrée stockés sur la mémoire cache de flux (108).

6. Système selon l'une quelconque des revendications 1 à 5, dans lequel le dispositif de stockage est fourni par un cache à deux niveaux (312) et/ou une mémoire externe (336, 338).

7. Système selon l'une quelconque des revendications 1 à 6, dans lequel le dispositif de stockage (112) est conçu pour transmettre les paquets de données stockés des données d'entrée à la mémoire cache de flux (108) sur une base premier entré, premier sorti à un moment déterminé par le dispositif de commande de cache de flux (106).

8. Système selon l'une quelconque des revendications 1 à 7, dans lequel le dispositif de stockage (112) est conçu pour transmettre les paquets de données stockés des données d'entrée à la mémoire cache de flux (108) sur une base premier entré, premier sorti en se basant sur le formatage de ces dernières tel qu'ordonné par le dispositif de commande de cache de flux (106).

9. Support lisible par ordinateur sur lequel sont stockées des instructions qui, lorsqu'elles sont exécutées par un ou plusieurs processeurs, contraignent le ou les processeurs :
à déterminer des paquets de données intacts d'un flux de données d'entrée à stocker localement sur une mémoire cache (108) jusqu'à ce que la capacité de stockage de la mémoire cache (108) soit à sa limite, et les paquets de données les plus récemment entrés du flux de données d'entrée à stocker sur un autre dispositif de stockage (112) lorsque la capacité de stockage de la mémoire cache (108) est à sa limite ;
à stocker des pointeurs pour les paquets de données intacts du flux de données d'entrée qui sont stockés localement sur la mémoire cache (108) ;
à surveiller la mémoire cache (108) au fur et à mesure que les paquets de données stockés du flux de données d'entrée sont transmis en sortie à un moteur de traitement de données (114) ; et
à fusionner les paquets de données du flux de données d'entrée qui sont stockés sur l'autre dispositif de stockage (112) en se basant sur un critère spécifié.

10. Support lisible par ordinateur selon la revendication 9, dans lequel la fusion consiste à fusionner les paquets de données intacts du flux de données qui sont stockés sur l'autre dispositif de stockage (112) dans la mémoire cache (108) sur une base premier entré, premier sorti.
